(19) Europäisches Patentamt
European Patent Office
Office européen des brevets

(11) EP 0 604 813 B1

(12) EUROPÄISCHE PATENTSCHRIFT

(45) Veröffentlichungstag und Bekanntmachung des Hinweises auf die Patenterteilung:
**14.04.1999 Patentblatt 1999/15**

(51) Int Cl.[6]: **C08G 69/10**, C08G 73/10, C11D 3/37, A01N 37/30, A01N 37/32, C02F 5/14

(21) Anmeldenummer: **93120055.4**

(22) Anmeldetag: **13.12.1993**

(54) **Verfahren zur Herstellung von Polysuccinimid, Polyasparaginsäure und ihrer Salze**

Method for the production of polysuccinimide, polyaspartic acid and their salts

Procédé de préparation de polysuccinimide, d'acide polyaspartique et de leurs sels

(84) Benannte Vertragsstaaten:
**BE DE ES FR GB IT NL**

(30) Priorität: **24.12.1992 DE 4244031**

(43) Veröffentlichungstag der Anmeldung:
**06.07.1994 Patentblatt 1994/27**

(60) Teilanmeldung: **97118624.2 / 0 821 054**

(73) Patentinhaber: **BAYER AG**
**51368 Leverkusen (DE)**

(72) Erfinder:
- **Groth, Torsten, Dr.**
  **D-21465 Reinbek (DE)**
- **Joentgen, Winfried, Dr.**
  **D-50769 Köln (DE)**
- **Linden, Hans Werner, Dr.**
  **D-51519 Odenthal-Glöbusch (DE)**
- **Müller, Nikolaus, Dr.**
  **D-40789 Monheim (DE)**
- **Rother, Heinz-Joachim, Dr.**
  **D-47803 Krefeld (DE)**
- **Wagner, Paul, Dr.**
  **D-40597 Düsseldorf (DE)**
- **Kugler, Martin, Dr.**
  **D-42799 Leichlingen (DE)**

(56) Entgegenhaltungen:
**EP-A- 0 256 366**
**WO-A-92/14753**
**GB-A- 2 246 786**
**US-A- 2 459 964**
**US-A- 3 846 380**
**US-A- 4 590 260**
**US-A- 5 057 597**

- **CHEMICAL ABSTRACTS, vol. 111, no. 6, 7. August 1989, Columbus, Ohio, US; abstract no. 40111d, & JP-A-63 270 735 (KOEI CHEMICAL) 8. November 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 604 813 B1

Printed by Jouve, 75001 PARIS (FR)

## Beschreibung

Die Erfindung betrifft ein Verfahren zur Herstellung von Polysuccinimid und Polyasparaginsäure und ihrer Salze durch Umsetzung von Maleinsäureanhydridderivaten.

Die Herstellung und Verwendung von Polyasparaginsäure (PAS) und ihrer Derivate ist seit langem Gegenstand zahlreicher Veröffentlichungen und Patente. So kann die Herstellung durch thermische Polykondensation von Asparaginsäure erfolgen (J. Org. Chem. 26, 1084 (1961)).

US-A 4 839 461 (= EP-A 0 256 366) beschreibt die Herstellung von Polyasparaginsäure aus Maleinsäureanhydrid, Wasser und Ammoniak. Maleinsäureanhydrid wird in wäßrigem Medium unter Zugabe von konzentrierter Ammoniak-Lösung in das Monoammoniumsalz umgewandelt. Das Monoammoniumsalz wird in der Schmelze zu Polysuccinimid polymerisiert und durch Hydrolyse in PAS oder ein Salz davon überführt. Aus US-A-2,459,964 ist bereits die Herstellung der Maleinamidsäure bekannt, aber ohne Hinweis auf ihre Polymerisation.

Aus US-A 4 590 260 (= JP-A 1984(59)-60160) ist bekannt, Aminosäuren zusammen mit Derivaten der Äpfel-, Malein- und/oder Fumarsäure bei 100 bis 225°C einer Polykondensation zu unterwerfen. Gemäß US-A-4 696 981 werden bei derartigen Reaktionen Mikrowellen eingesetzt.

In DE-A-2 253 190 (= US-A-3 846 380) wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid, siehe Beispiele) durch thermische Polymerisation zur Herstellung der Zwischenstufe Polysuccinimid, das seinerseits in geeigneten Lösungsmitteln mit Aminen zu den gewünschten Derivaten umgesetzt werden kann, verwendet.

PAS kann u.a. zur Inhibierung und zur Auflösung von mineralischen Ablagerungen (scale inhibitor und scale deposit remover) eingesetzt werden (US-A-4 839 461, EP-A-256 366, US-A-5 116 513). Weitere bekannte Anwendungen sind beispielsweise Waschmittelzusatz und in Düngemitteln (EP-A-256-366, US-A-4 839 461, EP-A-454 126) und Knochenersatzmaterialien (EP-A 383 568).

Die Erfindung betrifft ein Verfahren zur Herstellung von Polysuccinimid und von Polyasparaginsäure und ihren Salzen aus Maleinamidsäure, dadurch gekennzeichnet, daß man Maleinsäureanhydrid und Ammoniak, gegebenenfalls in Gegenwart eines Lösungsmittels, zu Maleinamidsäure umsetzt, die Maleinamidsäure bei 100°C bis 350°C in einem Reaktor bei einer Verweilzeit von etwa 0,5 bis 30 Minuten einer kontinuierlichen thermischen Polymerisation unterwirft und das erhaltene Polysuccinimid gegebenenfalls durch Hydrolyse zu Polyasparaginsäure bzw. einem Salz davon umsetzt.

Das erfindungsgemäß hergestellte Polysuccinimid enthält in einer bevorzugten Ausführungsform im wesentlichen wiederkehrende Einheiten folgender Formel

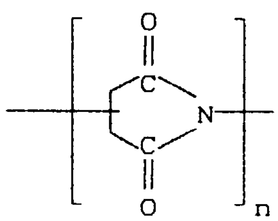

Im erfindungsgemäß hergestellten Polysuccinimid bzw. in der erfindungsgemäß hergestellten Polyasparaginsäure können durch geeignete Reaktionsführung und Wahl der Edukte weitere wiederkehrende Einheiten enthalten sein, z.B.

a.) Asparaginsäure-Einheiten der Formel

β-Form α-Form

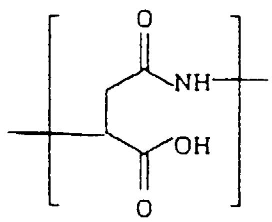

und

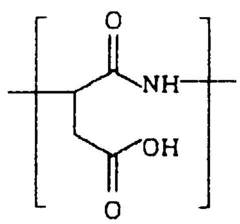

wobei im allgemeinen wenigstens 50 %, vorzugsweise wenigstens 70 % der PAS-Einheiten in der β-Form vorliegen.

b.) Apfelsäure-Einheiten der Formel

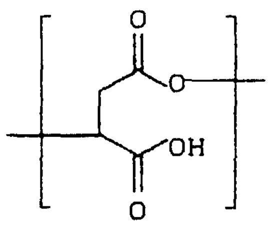

und

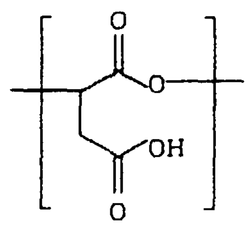

c.) Maleinsäure- und Fumarsäure-Einheiten der Formel

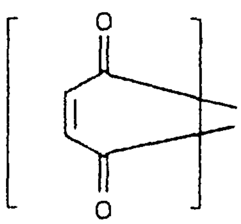

und

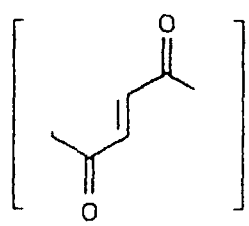

Die wiederkehrenden Einheiten b) und c) sind vorzugsweise in einer Menge von 1:1 bis 1:100 bezogen auf die Summe von a) und b) enthalten.

Die Analyse der chemischen Struktur erfolgt vorzugsweise mit $^{13}C$-NMR und nach Totalhydrolyse mit HPLC, GC und GC/MS.

Im unmittelbar bei der Polymerisation oder Hydrolyse enthaltenen Produkt können sowohl die oben angegebenen wiederkehrenden Einheiten a) und b) als auch gleichzeitig die unter $H_2O$-Abspaltung hergestellten Imidstrukturen vorhanden sein.

Die Erfindung betrifft weiterhin ein Verfahren zur Herstellung von Polyasparaginsäure und ihre Salze.

Die Polymerisationsprodukte können durch Lösen in einer Base bei 20 bis 95°C, bevorzugt 40 bis 70°C, besonders bevorzugt 50 bis 70°C in das entsprechende Polyasparaginsäuresalz überführt werden. Es ist auch möglich, durch Hydrolyse in Wasser bei 80°C bis 100°C oder durch Behandlung des Salzes mit Säuren oder sauren Ionenaustauschern bereits an dieser Stelle die freie Polyasparginsäure zu erhalten. Der Begriff "Polyasparaginsäure" umfaßt bei der vorliegenden Erfindung ebenfalls die Salze, falls nicht ausdrücklich anders festgestellt. Das Produkt wird durch Sprühtrocknung als feines Pulver erhalten.

Es wird angenommen, daß bei der erfindungsgemäßen Reaktion folgende Strukturen durchlaufen werden:

Maleinsäureanhydrid + $NH_3$ → Maleinamidsäure $\begin{matrix} CH-CONH_2 \\ \| \\ CH-COOH \end{matrix}$ →

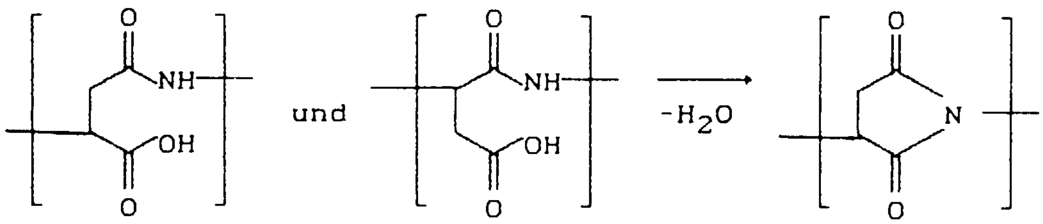


β-Amid und α-Amid → Polysuccinimid

Hydrolyse → Polyasparaginsäure(salz)

In einer bevorzugten Ausführungsform der Erfindung werden Maleinsäureanhydrid und Ammoniak in einem inerten Lösungsmittel zu Maleinamidsäure umgesetzt. Besonders bevorzugte Lösungsmittel sind halogenierte und nichthalogenierte aromatische Kohlenwasserstoffe, Alkane und Ether wie z.B. Chlorbenzol, o-Dichlorbenzol, Benzol, Toluol, Xylol, Cumol, Tetralin, Methylenchlorid, Chloroform, Diethylether, Tetrahydrofuran, Dioxan, Dimethoxyethan, Petrolether, Hexan und Heptan.

Beispiele von besonders bevorzugten Lösungsmitteln sind Toluol, Xylol, Dichlorbenzol, o-Dichlorbenzol. Die Umsetzung des Maleinsäureanhydrids mit Ammoniak wird insbesondere bei einem Druck von 0 bis 10, bevorzugt 0 bis 5, insbesondere 0,5 bis 3,5 bar bei einer Temperatur von 15 bis 100°C, insbesondere 40 bis 80°C, besonders bevorzugt 60 bis 70°C und bei einem molaren Verhältnis von Maleinsäureanhydrid: $NH_3$ von 1:0,8 bis 1:1,5, bevorzugt 1:0,95 bis 1:1,2, besonders 1:1 vorgenommen.

In einer besonders bevorzugten Ausführungsform der Erfindung werden zunächst Maleinsäureanhydrid und Ammoniak in einem inerten Lösungsmittel (Toluol) bei 60 bis 70°C und im Verhältnis 1:1 miteinander umgesetzt. Es entsteht eine Suspension von Maleinamidsäure in dem betreffenden Lösungsmittel. Nach Abtrennung des Lösungsmittels erhält man ohne weitere Reinigung eine Maleinamidsäure in hoher Reinheit und nahezu quantitativer Ausbeute. Die Herstellung von Maleinamidsäure an sich ist bereits bekannt aus JP-A 49 035 325, US-A 2 459 964, DE-A 847 287 und DE-A 945 987.

Die Maleinamidsäure wird in einem geeigneten kontinuierlich zu betreibenden Reaktor (Schaufeltrockner, einwellige und zweiwellige Hochviskosreaktoren, z.B. Discotherm- und All-Phasen-Konti-Geräte der Firma List, Schneckenmaschinen, bevorzugt selbstreinigende Mehrwellenschnecken oder in einem Bandreaktor) einer kontinuierlichen thermischen Kurzzeitpolymerisation mit einer Verweilzeit von 0,5 bis 30 Minuten, bevorzugt 1,5 bis 15 Minuten mit einer Temperatur von 100 bis 350°C (bevorzugt 155 bis 230°C) gegebenenfalls im Vakuum in ein Polymerisationsprodukt umgewandelt, das durch Lösen in einer Base bei 20 bis 95°C, bevorzugt 40 bis 70°C, besonders bevorzugt 50 bis 70°C in das entsprechende Polyasparaginsäuresalz überführt werden kann. Es ist auch möglich, durch Behandlung mit Säuren oder sauren Ionenaustauschern bereits an dieser Stelle die freie Polyasparaginsäure zu erhalten. Das Produkt wird durch Sprühtrocknung als feines Pulver erhalten.

Die o.a. Kurzzeitpolymerisation kann gegebenenfalls in Gegenwart eines Katalysators wie Oleum, Phosphonaten, Phosphiten, Phosphorsäuren incl. Polyphosphorsalzen, Sulfonsäuren oder quaternären Ammoniumsalzen durchgeführt werden.

Das hergestellte Polymer zeigt in Abhängigkeit von den Reaktionsbedingungen z.B. Verweilzeit und Temperatur der thermischen Polymerisation im Konti-Reaktor unterschiedliche Kettenlängen bzw. Molekulargewichte nach gelpermeationschromatographischer Analyse (Mw = 500 bis 10000, bevorzugt 1000 bis 5000, besonders bevorzugt 2000 bis 4000).

Die Erfindung betrifft weiterhin ein Verfahren zur Herstellung von Salzen der erfindungsgemäß hergestellten Polyasparaginsäure, bei dem das Polysuccinimid oder die freie Polyasparaginsäure mit Basen umgesetzt werden. Als Basen können beispielsweise Alkali- und Erdalkalimetallhydroxide oder Carbonate, insbesondere NaOH, KOH, LioH

verwendet werden. Die Konzentration der verwendeten Base ist nicht kritisch, sie beträgt vorzugsweise 5 bis 50 Gew.-% in Form von wäßrigen Lösungen.

Verwendung finden die erfindungsgemäßen Verbindungen insbesondere Polyasparaginsäure, insbesondere als Dispergiermittel, Waschmittelzusatz, Sequestriermittel, scale inhibitor, als Korrosionsinhibitor vor allem für Messing, als Mikrobizid und in Düngemitteln.

Spezifische Beispiele

1. Herstellung von Maleinamidsäure

In einem 10 l Autoklav (V4A) werden 4667 g trocken destilliertes Toluol und 1635 g = 16,7 Mol Maleinsäureanhydrid vorgelegt. Das Gemisch wird unter Rühren auf 60°C erhitzt. Nach 0,5 h bei dieser Temperatur werden innerhalb von ca. 6 h unter Konstant-Haltung der Temperatur 283 g = 16,7 Mol trockenes $NH_3$-Gas bis zu einem maximalen Druck von 3 bar eingeleitet. Nachdem die berechnete Menge $NH_3$-Gas verbraucht war, verblieb ein Restdruck von 0,5 bar. Es wird 2 h bei 60°C nachgerührt und auf Raumtemperatur abgekühlt. Die feine milchig weiße Produktsuspension wird filtriert. Man erhält 3933 g Filtrat und 2270 g Toluol-feuchte Maleinamidsäure. Nach Trocknung verblieben 1869 g Maleinamidsäure = 97,5 % der Theorie, Schmelzpunkt 168°C. Das rieselfähige Produkt hatte eine Schüttdichte von 0,55 g/ml.

2. Herstellung von Maleinamidsäure (konzentrierte Ausführung zur Erhöhung der Raum-/ Zeit-Ausbeute und Wirtschaftlichkeit)

In einem 10 l V4A-Autoklav werden 3969 g trocken destilliertes Toluol und 2256 g = 23,0 Mol Maleinsäureanhydrid vorgelegt. Das Gemisch wird unter Rühren auf 60°C erhitzt. Nach 0,5 h werden 391 g = 23,0 Mol trockenes $NH_3$-Gas innerhalb von 4,5 h bei 60 bis 70°C und einem Maximal-Druck von 2,6 bar eingeleitet. Nach beendetem Einleiten wird 2 h nachgerührt. Es verbleibt ein Restdruck von ca. 0,5 bar. Das Reaktionsgemisch wird auf Raumtemperatur abgekühlt und filtriert. Man erhält 3305 g Toluol-Ablauf (die Verdunstungsverluste im Labor können in der Technik vermieden werden) und 2775 g Toluol-feuchte Maleinamidsäure. Nach Trocknung verbleiben 2601 g Maleinamidsäure = 93,2 % der Theorie (Ausbeute aus Kohlenstoff). Schmelzpunkt 165,2°C

3. Herstellung von Polysuccinimid (Polyimid-Form)

14 kg Maleinamidsäure = 121,7 Mol (Schmelzpunkt: 166-168°C, Schüttdichte: 64,3 g/100 ml) wurden kontinuierlich aus einem Einfülltrichter über eine Förderschnecke auf den mit Wasser gekühlten Teil einer Reaktorschnecke befördert. Mit einer mittleren Verweilzeit von 1,5 bis 5 min wurde die zunächst feinkristalline weiße Maleinamidsäure in eine Vorwärmzone von ca, 130°C und danach in die Reaktionszone von ca. 155 bis 185°C befördert. In der Reaktionszone entstand eine Schmelze, in der der Polyadditions- bzw. Polykondensationsschritt ablief. Das dabei gebildete Reaktionswasser (und evtl. Zersetzungsprodukte) entwichen bei Normaldruck über einen Ausgasungsturm.

Der letzte Teil der Versuchsapparatur (ca. 1/5 der Länge) war geschlossen, so daß das entstehende Reaktionswasser an dieser Stelle nicht entweichen konnte. Daher gaste aus der am Ende der Schnecke austretenden Polymermasse das Restwasser aus, so daß die hochviskose Substanz unter (in etwa) Volumenverdoppelung aufblähte.

Die sich schnell abkühlende beige braune trockene Masse wurde gepulvert. Man erhält 11677 g Polymerisationsprodukt. (Ausbeute von 91,3 % der Theorie bezogen auf den Kohlenstoff-Wert.)

4. Herstellung von Polyasparaginsäure-Na-Salz sprühgetrocknet

11246 g des gemäß 3) erhaltenen Produktes = 107 Mol (aus Kohlenstoff) werden simultan mit 8305 g 48,8 %iger NaOH = 101,3 Mol in eine $H_2O$-Vorlage von 6620 g bei 50 bis 60°C eindosiert. Dabei wird ein pH-Wert von 9 nicht überschritten. Beim Auflösen des Rohproduktes muß eine vollständige Hydrolyse der Imid-Einheiten ohne Hydrolyse der Amid-Bindungen der Polymerkette erfolgen. Die hergestellte ca. 50 %ige Lösung (Dichte bei 20°C = 1,342, pH = 8,4) wird bei Verdampfertemperaturen von 80/180°C und einem Volumendurchsatz von 2 bis 3 l/h) sprühgetrocknet. Es entsteht mit einem Substanzverlust (nach Kohlenstoffanalyse) von ca. 10 % ein feinpulvriges hellgelbes Pulver. Das Produkt kann direkt als Sequestrier- und Dispergiermittel sowie als Korrosionsinhibitor eingesetzt werden.

Man erhält 14605 g PAS-Na-Salz sprühgetrocknet

| | |
|---|---|
| Gehalt: | 31,7 Gew.-% Kohlenstoff |
| | 5,7 Gew.-% Wasser |

Ausbeute: 90 % der Theorie aus Kohlenstoff

Es ist auch möglich, die wäßrige Polyasparaginsaure-Na-Salzlösung ohne Sprühtrocknung direkt zu verwenden.

Weitere Analysen:

1. Molekulargewichtsbestimmung mit GPC

Mn / Mw / Mz
1177 / 2569 / 3743

<u>Anwendungsbeispiel</u>

1. Prüfung als Korrosionsinhibitor

Blanke und entfettete Messigproben (MS 63) wurden für den Korrosionstest verwendet. Als Testlösung diente künstliches Meerwasser nach ASTM D 665-IP 135, welchem die zu prüfende Substanz zugegeben wurde. Während der Versuchsdauer von 7 Stunden befanden sich die Metallproben vollständig eingetaucht in der 55°C warmen Testlösung, in die ca. 100 ml Luft/min eingeleitet wurde.

Nach dem Test wurden die Metallproben 15 Sekunden lang in halbkonzentrierter Salzsäure gereinigt und mit Wasser und Aceton gewaschen. Vor und nach dem Test wurden die trockenen Metallproben gewogen. Aus dem Massenverlust wurde die prozentuale Schutzwirkung S, bezogen auf eine Blindprobe, berechnet:

$$S = \frac{m - m_1}{m} \times 100,$$

wobei

m = Massenverlust der Metallprobe ohne Inhibitor (Blindprobe),

$m_1$ = Massenverlust der Metallprobe mit Inhibitor

bedeuten.

Die Ergebnisse der prozentualen Schutzwirkung sind in der nachfolgenden Tabelle angegeben:

| Konzentration in mg/l | Schutzwirkung S in % |
|---|---|
| 10 | 9 |
| 25 | 70 |
| 50 | 81 |
| 0 | 0 |

2. Prüfung auf antimikrobielle Wirksamkeit

Die antimikrobielle Wirksamkeit der erfindungsgemäßen Verbindungen wurde mittels Bestimmung der minimalen Hemmkonzentration (MHK) untersucht.

Hierzu wurde Agar, hergestellt aus Bierwürze und Pepton, mit den erfindungsgemäßen Verbindungen in verschiedenen Konzentrationen versetzt. Nach Erstarren des Agars erfolgte Kontamination mit Reinkulturen der in der Tabelle ausgeführten Testorganismen. Nach 2-wöchiger Lagerung bei 28°C und 60 bis 70 % rel. Luftfeuchtigkeit wird die MHK bestimmt. MHK ist die niedrigste Konzentratrion an Wirkstoff, bei der kein Bewuchs durch die verwendete Mikrobenart erfolgt.

In der nachstehenden Tabelle sind die MHK-Werte für die erfindungsgemäße Verbindung angegeben.

| Testorganismen | MHK-Werte in mg/l |
|---|---|
| Bacillus subtilis | 3 000 |
| Pseudomonas aeruginosa | 3 000 |
| Penicillium brevicaule | 3 000 |
| Chaetomium globosum | 3 000 |
| Aspergillus niger | 3 000 |

3. Sequestieren eines Tensides

Beurteilung der Trübungsintensität einer Alkylbenzolsulfonsäure-Na-Salz-Lösung in Leitungswasser.

1 ml 10%ige Marlon A 375-Lösung werden unter Zugabe von 0,1 g sprühgetrocknetem PAS-Na-Salz mit Leitungswasser (Gesamt Härtegrad 14,1) auf 100 ml aufgefüllt. Die entstandene Lösung hat eine Standstabilität von über 7 Tagen. Ohne Zusatz von PAS-Na-Salz trübt sich die Lösung in wenigen Minuten.

4. Dispergieren von Zinkoxid

a) 0,3 PAS-Na-Salz werden mit 10 g Zinkoxid in 200 ml Leitungswasser dispergiert. Die Dispersion wird in einen 250 ml Meßzylinder gegeben. Nach 3 h werden Proben aus unterschiedlichen Stellen des Meßzylinders entnommen und auf ihren Zinkoxidgehalt untersucht. Dabei stellte sich heraus, daß der Zinkoxidgehalt infolge der guten dispergierenden Wirkung immer gleich ist. Weiterhin wird die Sedimentationsstabilität nach 3 h und nach 24 h bestimmt. In beiden Fällen wird praktisch keine Sedimentationsschicht ab Boden des Meßzylinders festgestellt.

## Patentansprüche

1. Verfahren zur Herstellung von Polysuccinimid, Polyasparaginsäure und ihren Salzen aus Maleinamidsäure, dadurch gekennzeichnet, daß man Maleinsäureanhydrid und Ammoniak, gegebenenfalls in Gegenwart eines Lösungsmittels, zu Maleinamidsäure umsetzt, die Maleinamidsäure bei 100°C bis 350°C in einem Reaktor bei einer Verweilzeit von 0,5 bis 30 Minuten einer kontinuierlichen thermischen-Polymerisation unterwirft und das erhaltene Polysuccinimid gegebenenfalls durch Hydrolyse zu Polyasparaginsäure bzw. einem Salz davon umsetzt.

2. Verfahren nach Anspruch 1, dadurch gekennzeichnet, daß man die Maleinamidsäure 1,5 bis 15 Minuten bei 155°C bis 230°C der Polymerisation unterwirft.

3. Verfahren nach wenigstens einem der vorhergehenden Ansprüche, dadurch gekennzeichnet, daß das Molekulargewicht der Polyasparaginsäure, bestimmt nach der Gelpermeationschromatographie mit Absoluteichung, 500 bis 10000 beträgt.

4. Verfahren nach wenigstens einem der vorhergehenden Ansprüche, dadurch gekennzeichnet, daß die Polyasparaginsäure wiederkehrende Einheiten aufweist, die in Form der freien Säure folgender Struktur entsprechen:

a)

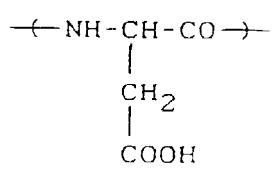

und

b) 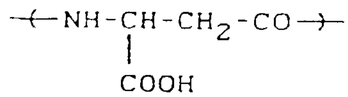

5. Verfahren zur Herstellung von Polyasparaginsäuresalzen gemäß wenigstens einem der vorhergehenden Ansprüche, dadurch gekennzeichnet, daß das gemäß Anspruch 1 erhaltene Polysuccinimid mit einer Base hydrolysiert wird.

**Claims**

1. Process for the preparation of polysuccinimide, polyaspartic acid and salts thereof from maleamic acid, characterized in that maleic anhydride and ammonia are reacted, optionally in the presence of a solvent, to give maleamic acid, the maleamic acid is subjected to continuous thermal polymerization at from 100°C to 350°C in a reactor at a residence time of from 0.5 to 30 minutes, and the resultant polysuccinimide is, if desired, converted into polyaspartic acid or a salt thereof by hydrolysis.

2. Process according to Claim 1, characterized in that the maleamic acid is subjected to the polymerization for from 1.5 to 15 minutes at from 155°C to 230°C.

3. Process according to at least one of the preceding claims, characterized in that the molecular weight of the polyaspartic acid, determined by gel permeation chromatography with absolute calibration, is from 500 to 10,000.

4. Process according to at least one of the preceding claims, characterized in that the polyaspartic acid contains recurring units which, in the form of the free acid, conform to the following structure:

a) 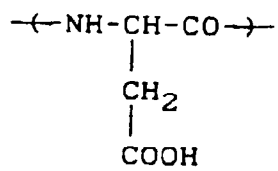

and

b) 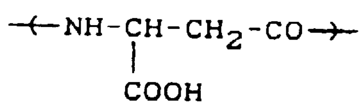

5. Process for the preparation of polyaspartic acid salts according to at least one of the preceding claims, characterized in that the polysuccinimide obtained according to Claim 1 is hydrolysed by means of a base.

**Revendications**

1. Procédé pour la préparation de polysuccinimide, d'acide polyaspartique et de ses sels à partir d'acide maléamique, caractérisé en ce qu'on fait réagir de l'anhydride maléique et de l'ammoniac, le cas échéant en présence d'un solvant, pour obtenir de l'acide maléamique, on soumet à une polymérisation par voie thermique en continu l'acide maléamique à une température de 100°C à 350°C dans un réacteur avec un temps de séjour de 0,5 à 30 minutes et on fait réagir le polysuccinimide obtenu le cas échéant par hydrolyse pour obtenir l'acide polyaspartique, respectivement un sel de ce dernier.

2. Procédé selon la revendication 1, caractérisé en ce qu'on soumet l'acide maléamique à la polymérisation pendant un laps de temps de 1,5 à 15 minutes à une température de 155°C à 230°C.

**3.** Procédé selon au moins une des revendications précédentes, caractérisé en ce que le poids moléculaire de l'acide polyaspartique déterminé conformément à la chromatographie par perméation du gel avec un étalonnage absolu s'élève de 500 à 10.000.

**4.** Procédé selon au moins une des revendications précédentes, caractérisé en ce que l'acide polyaspartique présente des unités récurrentes qui, sous la forme de l'acide libre, correspondent aux structures ci-après:

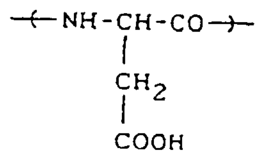

et

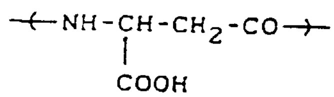

**5.** Procédé pour la préparation de sels de l'acide polyaspartique conformément à au moins une des revendications précédentes, caractérisé en ce qu'on hydrolyse avec une base le polysuccinimide obtenu conformément à la revendication 1.